(19) **Europäisches Patentamt / European Patent Office / Office européen des brevets**

(11) **EP 4 718 347 A1**

(12) **EUROPEAN PATENT APPLICATION**

(43) Date of publication:
**01.04.2026  Bulletin 2026/14**

(21) Application number: **24212788.4**

(22) Date of filing: **13.11.2024**

(51) International Patent Classification (IPC):
**G06Q 10/04** *(2023.01)*    **G06Q 50/06** *(2024.01)*

(52) Cooperative Patent Classification (CPC):
**G06Q 10/04; G06Q 50/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.09.2024  CN 202411354406**

(71) Applicants:
- **China Datang Technology Innovation Co., Ltd.**
  **Shijiazhuang, Hebei 070001 (CN)**
- **Tsinghua University**
  **Beijing 100084 (CN)**

(72) Inventors:
- **Song, Yin**
  **Shijiazhuang, Hebei, 070001 (CN)**
- **Xu, Ruina**
  **Beijing, 100084 (CN)**
- **Liu, Pei**
  **Beijing, 100084 (CN)**
- **Cao, Fan**
  **Shijiazhuang, Hebei, 070001 (CN)**
- **Zhang, Meng**
  **Shijiazhuang, Hebei, 070001 (CN)**

- **Li, Zhihe**
  **Beijing, 100084 (CN)**
- **Liu, Chao**
  **Beijing, 100084 (CN)**
- **Wang, Wei**
  **Shijiazhuang, Hebei, 070001 (CN)**
- **Nan, Xiong**
  **Shijiazhuang, Hebei, 070001 (CN)**
- **Jiao, Yang**
  **Shijiazhuang, Hebei, 070001 (CN)**
- **Dong, Yuxiao**
  **Beijing, 100084 (CN)**
- **Jiang, Peixue**
  **Beijing, 100084 (CN)**
- **Yang, Lin**
  **Shijiazhuang, Hebei, 070001 (CN)**
- **Shi, Wengang**
  **Shijiazhuang, Hebei, 070001 (CN)**
- **Zhang, Nuobei**
  **Beijing, 100084 (CN)**
- **Sun, Guanxun**
  **Beijing, 100084 (CN)**

(74) Representative: **Petraz, Gilberto Luigi et al**
**GLP S.r.l.**
**Viale Europa Unita, 171**
**33100 Udine (IT)**

(54) **METHOD AND APPARATUS FOR DESIGNING AND PLANNING LOW-CARBON ENERGY SYSTEM BASED ON SOURCE-GRID-LOAD-STORAGE-HYDROGEN-CHEMICAL**

(57)    A method for designing and planning a low-carbon energy system based on source-grid-load-storage-hydrogen-chemical includes obtaining (S1) user natural language information; constructing (S2) a large model for planning the low-carbon energy system; the large model includes a large language model and a planning module; identifying (S3) a user intention by inputting the user natural language information into the large language model, and invoking the planning module based on the user intention identified; converting (S4) the user natural language information into a preset format of input data and inputting the preset format of input data into the planning module, and outputting a planning report by optimization solving of the planning module; displaying a planning result corresponding to the planning report by the large language model.

EP 4 718 347 A1

| obtaining user natural language information | S1 |

↓

| constructing a large model for planning the low-carbon energy system; wherein the large model for planning the low-carbon energy system comprises a large language model and a planning module; wherein the planning module comprises a database, a model base, a design optimization module and an operation optimization module | S2 |

↓

| identifying a user intention by inputting the user natural language information into the large language model, and invoking the planning module based on the user intention identified | S3 |

↓

| transforming content of the user natural language information into an input parameter of the planning module through the large language model, and inputting the input parameter into the design optimization module through a preset interface; wherein the design optimization module is provided with a built-in database and a built-in model base, an optimization problem is constructed in the design optimization module, optimal planning is performed under various boundary conditions by means of minimizing a total cost according to a model of the built-in model base and data of the built-in database, and an optimal design solution and respective performance indicators of the system are generated after calculation of an optimization algorithm | S4 |

↓

| obtaining customized capacity configuration by reconfiguring a system capacity according to the optimal design solution of the system and the respective performance indicators of the system, and obtaining a customized topology relation by designing the customized topology relation for respective energy utilization modules of the model of the model base; constructing the optimization problem based on the model base and the database according to the customized capacity configuration and the customized topology relation, and outputting an optimization solution result by converting an lowest daily operating cost to a preset format of optimization objective, converting an operation strategy of each system component into a preset format of optimization variable, and performing an optimization solution on a plurality of time scales | S5 |

FIG. 1

**Description**

**TECHNICAL FIELD**

The present disclosure relates to a technical field of large model of energy, and particularly to a method and an apparatus for designing and planning a low-carbon energy system based on source-grid-load-storage-hydrogen-chemical.

**BACKGROUND**

In the field of large model of energy, the large model mainly focuses on realization of knowledge question and answer functions, and mainly focuses on a certain field of traditional power production/transmission, which lacks a deep coupling model of multiple types of energy sources, multiple energy storage forms, and multiple application scenarios in the low-carbon field. Implementation of an agent is mostly based on an open source framework, such as LangChain. There are already a large number of tools available for calling in a community, but there are no tools related to design and planning of a low-carbon energy system, which needs customized development. Although the present tools can cover conventional planning scenarios, but are difficult to meet requirements on the scenario of the low-carbon energy system, and do not have an open source condition and an ability to connect with the large model. Therefore, it is necessary to independently develop a design and planning tool for the low-carbon energy system.

Due to an underlying principle of the large model, the large model cannot perform complex mathematical calculations. However, the design and planning involves complex optimization algorithms, which cannot be realized solely by relying on the large model itself. Therefore, it is necessary to accurately invoke a design and planning module by the large model to achieve this function. There are no related design and planning tools for the low-carbon energy system in an agent tool library based on the open source framework, and a combination of the large model with the design and planning cannot be realized.

Existing design and planning tools for the low-carbon energy system have following shortcomings. First, the model lacks comprehensive and refined functionality, and lacks depiction of chemical fields such as methanol and ammonia, as well as depiction of variable operating conditions of some power generation technologies. Second, the model lacks a built-in database, and some existing tools still require manual input of some data. Third, the existing tools generally do not have the ability to connect with the large model, and some existing tools have a high threshold for usage, requiring certain professional knowledge to use. Fourth, most of the existing tools are based on simulation and lack real-time optimal scheduling solutions, and, methods of the existing tools lack multi-time scale scheduling and planning from a multi-time perspective of day-ahead, intraday, and real-time.

**SUMMARY**

The disclosure is intended to solve, at least to a certain extent, one of the technical problems in the related art.

The disclosure provides a method and an apparatus for designing and planning a low-carbon energy system based on source-grid-load-storage-hydrogen-chemical, capable of combining a large language model and a design and planning tool as an agent, which may realize a low threshold for users to complete designing and planning of the low-carbon energy system in a form of natural language interaction.

According to a first aspect of the present disclosure, a method for designing and planning a low-carbon energy system based on source-grid-load-storage-hydrogen-chemical is provided. The method includes: obtaining user natural language information; constructing a large model for planning the low-carbon energy system; in which the large model for planning the low-carbon energy system includes a large language model and a planning module; identifying a user intention by inputting the user natural language information into the large language model, and invoking the planning module based on the user intention identified; in which the planning module includes a database, a model base, a design optimization module and an operation optimization module; transforming content of the user natural language information into an input parameter of the planning module through the large language model, and inputting the input parameter into the design optimization module through a preset interface; in which the design optimization module is provided with a built-in database and a built-in model base, an optimization problem is constructed in the design optimization module, optimal planning is performed under various boundary conditions by means of minimizing a total cost according to a model of the built-in model base and data of the built-in database, and an optimal design solution and respective performance indicators of the system are generated after calculation of an optimization algorithm; obtaining customized capacity configuration by reconfiguring a system capacity according to the optimal design solution of the system and the respective performance indicators of the system, and obtaining a customized topology relation by designing the customized topology relation for respective energy utilization modules of the model of the model base; and constructing the optimization problem based on the model base and the database according to the customized capacity configuration and the customized topology relation, converting an lowest daily operating cost to a preset format of optimization objective and converting an operation strategy of each system component into a preset format of optimization variable and outputting an optimization solution result by performing an optimization solution on a plurality of time scales.

Optionally, the method for designing and planning the low-carbon energy system based on source-grid-load-storage-hydrogen-chemical may also have following additional technical features.

Optionally, the user natural language information at least includes a geographical location of the energy system, a latitude and longitude, a type of a power unit, a usage state of an energy storage module, an electricity demand condition, carbon emission related constraints.

Optionally, the database includes a variety of device data, meteorological data, internet access policy, load data and other data; in which the model base includes a variety of a source side model, a network side model, a load side model, a storage side model, hydrogen side data and chemical data.

Optionally, the optimization variable of the optimization algorithm includes a system design variable, including installed capacities of various energy technologies, and a system operation variable, including an operation strategy of each unit.

Optionally, an objective function of the optimization algorithm is a minimized system annualized cost; in which a constraint equation of the optimization algorithm includes a variety of a installed capacity constraint, a total system carbon emission constraint, a unit operation constraint, a unit operation state calculation equation, a system electric power balance equation, a system annualized cost equation, and a system annual carbon emission calculation equation.

Optionally, the operation optimization module further includes a front-end interface, and the method includes generating a system report by the front-end interface according to the obtained optimization solution result and the customized capacity configuration and the customized topology relation input via the front-end interface.

Optionally, the optimization solution result includes: a variety of a system balance condition, a system operating cost, a loss of load condition, an energy storage condition, an absorption condition of renewable energy source.

According to another aspect of embodiments of the present disclosure, an apparatus for designing and planning a low-carbon energy system based on source-grid-load-storage-hydrogen-chemical is provided. The apparatus includes: a user data acquiring module, a system model constructing module, a model invoking module, a design optimization computing module, and an optimization solution outputting module. The user data acquiring module is configured to obtain user natural language information. The system model constructing module is configured to construct a large model for planning the low-carbon energy system, in which the large model for planning the low-carbon energy system includes a large language model and a planning module, the planning module includes a database, a model base, a design optimization module and an operation optimization module. The model invoking module is configured to identify a user intention by inputting the user natural language information into the large language model, and invoke the planning module based on the user intention identified. The design optimization computing module is configured to transform content of the user natural language information into an input parameter of the planning module through the large language model, and input the input parameter into the design optimization module through a preset interface, in which the design optimization module is provided with a built-in database and a built-in model base, an optimization problem is constructed in the design optimization module, optimal planning is performed under various boundary conditions by means of minimizing a total cost according to a model of the built-in model base and data of the built-in database, and an optimal design solution and respective performance indicators of the system are generated after calculation of an optimization algorithm. The optimization solution outputting module is configured to obtain customized capacity configuration by reconfiguring a system capacity according to the optimal design solution of the system and the respective performance indicators of the system, and obtain a customized topology relation by designing the customized topology relation for respective energy utilization modules of the model of the model base; and construct the optimization problem based on the model base and the database according to the customized capacity configuration and the customized topology relation, convert an lowest daily operating cost to a preset format of optimization objective and convert an operation strategy of each system component into a preset format of optimization variable and output an optimization solution result by performing an optimization solution on a plurality of time scales.

According to the method and the apparatus for designing and planning the low-carbon energy system based on source-grid-load-storage-hydrogen-chemical in embodiments of the disclosure, in the basic of a solution of a data resource base and an optimization algorithm base of the low-carbon energy field, a development technical route of a low-carbon system design platform covering integration of energy, electric power and chemical may be explored, , and a first design and planning platform that meets multi-energy heterogeneous coupling requirements of the low-carbon energy system is constructed, a first professional large model is trained in the field of low-carbon energy by the large language model technology, and a first agent for energy knowledge processing and data analysis is established, and it may realize that the large language model can ask questions according to user's natural language, independently plan the design function, and a friendly interactive experience and a high-quality design and planning report can be provided to the user.

Additional aspects and advantages of embodiments of present disclosure will be given in part in the following descriptions, become apparent in part from the following descriptions, or be learned from the practice of the embodiments of the present disclosure.

## BRIEF DESCRIPTION OF THE DRAWINGS

The above and/or additional aspects and advantages of the present disclosure will become obvious and easy to understand from the following description of the embodiments with reference to the accompanying drawings, in which:

FIG. 1 is a flowchart of a method for designing and planning a low-carbon energy system based on source-grid-load-storage-hydrogen-chemical according to an embodiment of the present disclosure.
FIG. 2 is a flowchart of a json formal algorithm according to an embodiment of the present disclosure.
FIG. 3 is a block diagram of an agent for planning a low carbon energy system according to an embodiment of the present disclosure.
FIG. 4 is a logic diagram of a planning module of a low-carbon energy system according to an embodiment of the present disclosure.
FIG. 5 is a schematic diagram of a design module of a low-carbon energy system according to an embodiment of the present disclosure.
FIG. 6 is a schematic diagram of an operation module of a low-carbon energy system according to an embodiment of the present disclosure.
FIG. 7 is a structure diagram of an apparatus for designing and planning a low-carbon energy system based on source-grid-load-storage-hydrogen-chemical according to an embodiments of the present disclosure.

## DETAILED DESCRIPTION

It should be noted that embodiments and features in embodiments of the disclosure can be combined with each other without conflict. The disclosure is described in detail below with reference to the accompanying drawings in combination with embodiments.

In order to enable those skilled in the art to understand the technical solutions of the present disclosure, technical solutions in embodiments of the present disclosure will be clearly and completely described below with reference to the accompanying drawings in embodiments of the present disclosure. Obviously, the embodiments described here are only part of the embodiments of the present disclosure and are not all embodiments of the present disclosure. Based on the embodiments of the present disclosure, other embodiments obtained by those skilled in the art without creative labor are within the scope of the present disclosure.

A method and an apparatus for designing and planning a low-carbon energy system based on source-grid-load-storage-hydrogen-chemical according to embodiments of the disclosure will be described below with reference to the accompanying drawings.

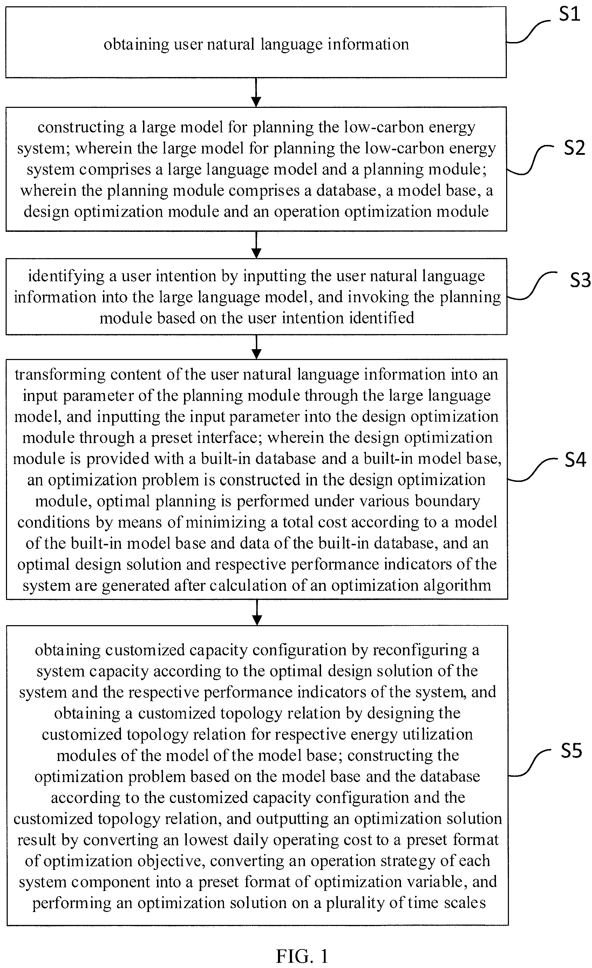

FIG. 1 is a flowchart of a method for designing and planning a low-carbon energy system based on source-grid-load-storage-hydrogen-chemical according to an embodiment of the present disclosure. As illustrated in FIG. 1, the method includes following blocks.

At block S1, user natural language information is obtained.

At block S2, a large model for planning the low-carbon energy system is constructed; in which the large model for planning the low-carbon energy system includes a large language model and a planning module, in which the planning module includes a database, a model base, a design optimization module and an operation optimization module.

At block S3, a user intention is identified by inputting the user natural language information into the large language model, and the planning module is invoked based on the user intention identified.

At block S4, content of the user natural language information is transformed into an input parameter of the planning module through the large language model, and the input parameter is inputted into the design optimization module through a preset interface; in which the design optimization module is provided with a built-in database and a built-in model base, an optimization problem is constructed in the design optimization module, optimal planning is performed under various boundary conditions by means of minimizing a total cost according to a model of the built-in model base and data of the built-in database, and an optimal design solution and respective performance indicators of the system are generated after calculation of an optimization algorithm.

At block S5, customized capacity configuration is obtained by reconfiguring a system capacity according to the optimal design solution of the system and the respective performance indicators of the system, and a customized topology relation is obtained by designing the customized topology relation for respective energy utilization modules of the model of the model base; and the optimization problem is constructed based on the model base and the database according to the customized capacity configuration and the customized topology relation, and an optimization solution result is outputted by converting an lowest daily operating cost to a preset format of optimization objective, converting an operation strategy of each system component into a preset format of optimization variable, and performing an optimization solution on a plurality of time scales.

In an embodiment of the disclosure, a user may interact with an agent in a form of natural language information, and the large language model automatically selects to directly answer a question of the user by identifying the user intention.

The large language model may understand the meaning and context of a question or description of the user by analyzing the question or description of the user, to determine a type of information that the user desires to obtain or a task to be performed. If necessary, a search function may be used to obtain the latest information or data. An accurate, relevant, and helpful answer may be constructed based on what the large language model understands and the information it retrieves. The generated answer may be presented to the user in a form of natural language.

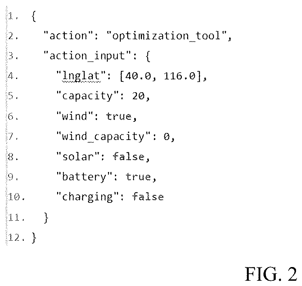

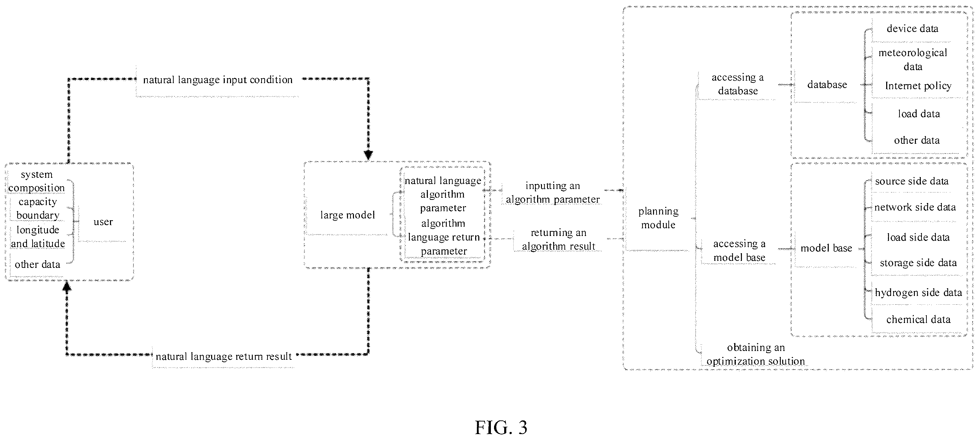

In an embodiment of the disclosure, c may identify a user intention by inputting the user natural language information into the large language model, and invoke the planning module based on the user intention identified. If it is selected to invoke the planning module, the large language model may generate an invoking command in a form of json, as illustrated in FIG. 2. The "action" corresponds to a name of a tool, and "action_input" corresponds to an input parameter name and a corresponding value of the tool. A latitude and longitude, a type of a power unit, a usage state of an energy storage module, an electricity demand condition, and carbon emission related constraints may be converted into input data in a preset format and transferred to a design and planning tool for a low-carbon system. If required parameters of the design and planning tool are not inputted by the user, the agent may return a prompt of a corresponding parameter to be added by the user. In a case that the parameter meets a requirement, the agent may invoke the design and planning module with the parameter input by the user, and the design and planning module may return a planning report. The large language model may summarize and refine the planning report and return a planning result to the user. The overall process is shown in FIG. 3.

Compared the present disclosure with existing products of energy system design and planning, the existing products mostly use a graphical interface to drag and edit parameters or run a program after the user fills in a form, which has a higher threshold for usage., while the disclosure combines the large language model and the design and planning tool as the agent, which may realize the design and planning of the low-carbon energy system by using natural language as an interactive form with a low threshold for users.

In an embodiment of the disclosure, a large model for planning the low-carbon energy system is to be constructed. The large model for planning the low-carbon energy system includes the large language model and the planning module.

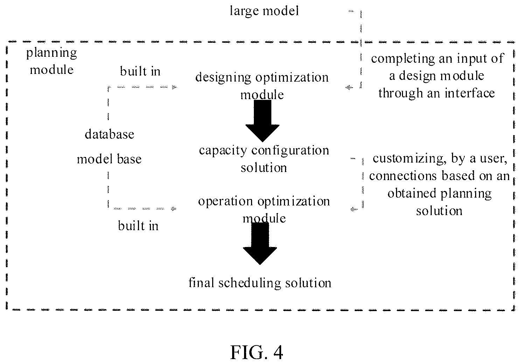

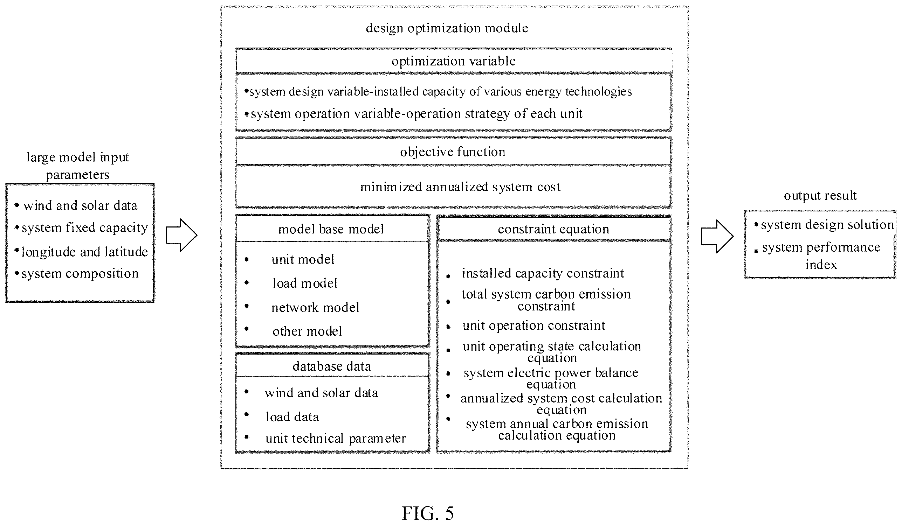

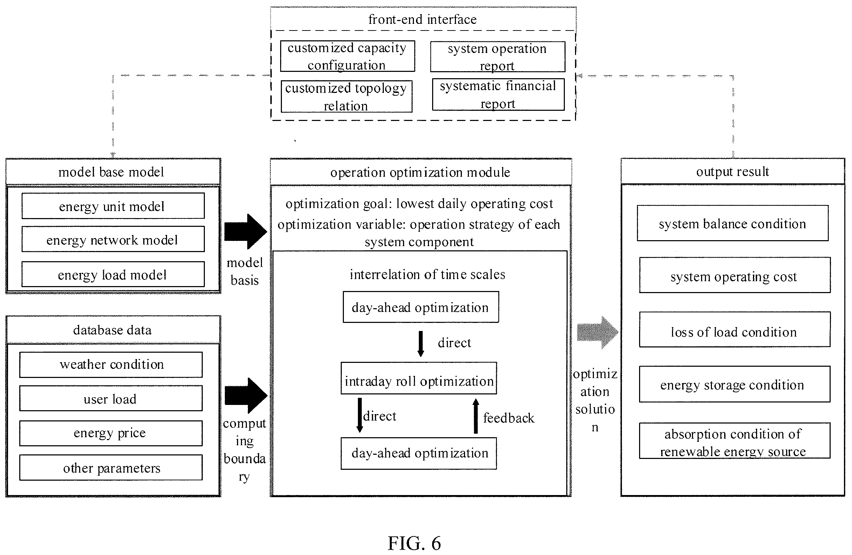

The main composition and logic of the planning module in embodiments of the disclosure are illustrated in FIG. 4. The planning module mainly includes four parts. The first one is the database. As illustrated in FIG. 3, the database mainly includes device data, meteorological data, internet access policy, load data and other data. The second one is the model base. The model base mainly includes a source side model, a network side model, a load side model, a storage side model, hydrogen side data and chemical data. The third one is the design optimization module, a main principle of which is illustrated in FIG. 5. The fourth one is an operation optimization module, a main principle of which is illustrated in FIG. 6.

Specifically, the disclosure converts the user natural language information into a preset format of input data and inputs the preset format of input data into the planning module, and inputs a planning report through an optimization solution of the planning module. The main operation logic is as follows.

The large model converts the geographical location of an energy system, the type of the power unit, the electricity demand condition, the carbon emission related constraints includes in the user natural language into the input parameter of the planning module, and the input parameter is input into the design optimization module through an interface of the design optimization module. The design optimization module is provided with the built-in database and the built-in model base, and may access data in the built-in database and the built-in model base, and generates a capacity configuration solution through a specific optimization algorithm. The user customizes a connection and design in a front-end interface of the operation optimization module based on the capacity configuration solution, and generates a final scheduling solution after an optimization of the operation optimization module.

A schematic diagram of the design optimization module in embodiments of the disclosure is illustrated in FIG. 5. Input data of the design optimization module is input parameters of the design optimization module converted by the large model based on user input text, which includes a fixed capacity of a generator set, a longitude and latitude, and a main composition of the system.

For example, the design optimization module of the disclosure is provided with the built-in database and the built-in model base, accessing the data in the built-in database and the built-in model base, and generating the capacity configuration solution through the specific optimization algorithm may include:
constructing the optimization problem in the design optimization module, performing the optimal planning under various boundary conditions by means of minimizing the total cost based on the model of the built-in model base and the data of the built-in database, and generating the optimal design solution and respective performance indicators of the system after calculation of the optimization algorithm.

It can be understood that the optimization variable of the optimization algorithm of the design optimization module in the low-carbon energy system includes a system design variable, including installed capacities of various energy technologies, and a system operation variable, including an operation strategy of each unit. An objective function of the optimization algorithm is a minimized system annualized cost. A constraint equation of the optimization algorithm includes a variety of a installed capacity constraint, a total system carbon emission constraint, a unit operation constraint, a unit operation state calculation equation, a system electric power balance equation, a system annualized cost equation, and a system annual carbon emission calculation equation.

Specifically, taking the "integrated optical, storage and charging system" as an example, the input parameter can be technical and economic parameters, such as a photovoltaic power output curve, a charging demand curve, a grid purchase price, and an energy storage cost. The planning objective is to maximize an annual profit of the system.

$$\max R = R_{\mathrm{net}} + R_{\mathrm{char}} - C_{\mathrm{buy}} - C_{\mathrm{inv}}$$

where $R$ is the annual profit of the system, $R_{\mathrm{net}}$ is an annual grid connection income of the system, $R_{\mathrm{char}}$ is an annual electricity sale income of the system, $C_{\mathrm{buy}}$ is an annual electricity purchase cost of the system, $C_{\mathrm{inv}}$ is an annual investment cost of energy storage.

The constraints include:

(1) a capacity limitation constraint:

$$0.2 \le SOC(t) \le 0.9,$$

which indicates that an energy storage battery should run in a certain range of state of charge.

(2) a capacity recovery constraint:

$$SOC_{\mathrm{start}} = SOC_{\mathrm{end}},$$

which indicates that the energy storage battery returns to an initial state of charge after a period of operation.

(3) a device state constraint:

$$x_{\mathrm{cha}}(t) + x_{\mathrm{dis}}(t) = 1,$$

which indicates that at a time point t, the energy storage battery cannot be charged or discharged simultaneously.

(4) a supply and demand balance constraint:

$$P_{\mathrm{pv}}(t) = P_{\mathrm{pv2grid}}(t) + P_{\mathrm{pv2bat}}(t) + P_{\mathrm{pv2load}}(t),$$

, which indicates that at the time point t, photovoltaic power output has three ways to output the power: outgoing grid, battery energy storage, and load absorption;

$$P_{\mathrm{load}}(t) = P_{\mathrm{pv2load}}(t) + P_{\mathrm{bat2load}}(t) + P_{\mathrm{grid2load}}(t),$$

which indicates that at the time point t, a load supply is satisfied by three parts: photovoltaic power output, battery energy storage, and power grid electricity purchase.

Finally, an output result of the design optimization module includes an annual income of the system, a battery capacity configuration strategy, and a system operation strategy.

Further, a schematic diagram of the operation optimization module is illustrated in FIG. 6. The operation optimization module mainly includes three main components: a front-end that can interact with the user, the model base and the database, and the optimization algorithm.

Specifically, the user customizing the connection and design in the front-end interface of the operation optimization module based on the capacity configuration solution, and generating the final scheduling solution after the optimization of the operation optimization module may include:

reconfiguring, by the user, a customized capacity according to a calculation result of the design optimization module, which includes the optimal design solution of the system and the respective performance indicators of the system, and designing a customized topology relation for respective energy utilization modules; and

constructing the optimization problem based on the model base and the database according to the customized capacity configuration and the customized topology relation, and outputting the optimization solution result by converting the lowest daily operating cost to the preset format of optimization objective, converting the operation strategy of each system component into the preset format of optimization variable, and performing the optimization solution on the plurality of time scales.

It can be understood that the operation optimization module constructs the optimization problem according to various capacity configurations input by users and the topology relation, in combination with the model base and the database, and performs the optimization on the plurality of time scales. The operation optimization module performs rolling optimization from three perspectives of d day-ahead, intraday, and real-time to guide actual production. The operation optimization module finally transmits the optimization result to the front-end to feed back to the user. The system report can be generated by the front-end interface according to the obtained optimization solution result.

It can be known that the optimization solution result generated by the operation optimization module includes: a variety of a system balance condition, a system operating cost, a loss of load condition, an energy storage condition, an absorption condition of renewable energy source.

For example, taking the "integrated optical, storage and charging system" as an example, the operation optimization module first predicts a light level and a load demand in a future day with a resolution of 60 minutes, and uses a predicting result as an input parameter to obtain the system operation strategy in the future day, that is, an intraday day optimization. In intraday rolling optimization, a day-ahead optimization result is corrected with a resolution of 15 minutes and a prediction time domain of 4 hours, such as modifying a distribution of photovoltaic power output and an operation curve of battery energy storage. In real-time optimization, an output of a fast unit is adjusted to compensate for fluctuations in load demand and renewable energy generation with a resolution of 1 minute and a predicted time domain of 5 minutes.

In summary, the beneficial effects of the disclosure are as follows.

Based on reality that the existing smart energy platform focuses on energy-electricity-heat/steam, through in-depth research on independent optimization of energy, electricity and chemical in the field of low-carbon energy, as well as the high threshold for usage of the traditional design planning platform, researching and developing innovative technical methods includes establishment of a data resource base and an optimization algorithm base, development of a first design and planning module for the low-carbon system with energy-electricity-physics collaborative optimization, to realize agents in the low-carbon energy field with the large model as a decision-making center and the design and planning module as the tool library, so as to solve key technical difficulties in the design and planning platform of the smart low-carbon energy system and to achieve a goal of constructing the design and planning platform of the smart low-carbon energy system with natural language as the interactive form.

According to the method for designing and planning the low-carbon energy system based on source-grid-load-storage-hydrogen-chemical in embodiments of the disclosure, a first professional large model is trained in the field of low-carbon energy by the large language model technology, and a first agent for energy knowledge processing and data analysis is established, and it may realize that the large language model can ask questions according to user's natural language, independently plan the design function, and a friendly interactive experience and a high-quality design and planning report can be provided to the user.

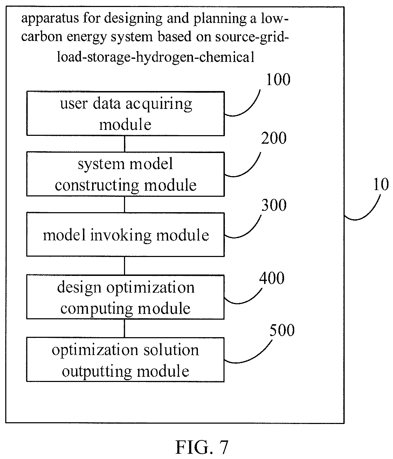

In order to realize the above embodiments, as illustrated in FIG. 7, an embodiment also provides an apparatus 10 for designing and planning a low-carbon energy system based on source-grid-load-storage-hydrogen-chemical. The apparatus 10 includes a user data acquiring module 100, a system model constructing module 200, a model invoking module 300, a design optimization computing module 400, and an optimization solution outputting module 500.

The user data acquiring module 100 is configured to obtain user natural language information.

The system model constructing module 200 is configured to construct a large model for planning the low-carbon energy system. The large model for planning the low-carbon energy system includes a large language model and a planning module. The planning module includes a database, a model base, a design optimization module and an operation optimization module.

The model invoking module 300 is configured to identify a user intention by inputting the user natural language information into the large language model, and invoke the planning module based on the user intention identified.

The design optimization computing module 400 is configured to transform content of the user natural language information into an input parameter of the planning module through the large language model, and input the input parameter into the design optimization module through a preset interface; in which the design optimization module is provided with a built-in database and a built-in model base, an optimization problem is constructed in the design optimization module, optimal planning is performed under various boundary conditions by means of minimizing a total cost according to a model of the built-in model base and data of the built-in database, and an optimal design solution and respective performance indicators of the system are generated after calculation of an optimization algorithm.

The optimization solution outputting module 500 is configured to obtain customized capacity configuration by reconfiguring a system capacity according to the optimal design solution of the system and the respective performance indicators of the system, and obtain a customized topology relation by designing the customized topology relation for respective energy utilization modules of the model of the model base; and construct the optimization problem based on the model base and the database according to the customized capacity configuration and the customized topology relation, convert an lowest daily operating cost to a preset format of optimization objective and convert an operation strategy of each system component into a preset format of optimization variable and output an optimization solution result by performing an optimization solution on a plurality of time scales.

In an embodiment of the disclosure, the user natural language information at least includes a geographical location of the energy system, a latitude and longitude, a type of a power unit, a usage state of an energy storage module, an electricity demand condition, carbon emission related constraints; in which the database includes a variety of device data, meteorological data, internet access policy, load data and other data; in which the model base includes a variety of a source side model, a network side model, a load side model, a storage side model, hydrogen side data and chemical data.

In an embodiment of the disclosure, the optimization variable of the optimization algorithm includes a system design variable, including installed capacities of various energy technologies, and a system operation variable, including an operation strategy of each unit; in which an objective function of the optimization algorithm is a minimized system annualized cost; in which a constraint equation of the optimization algorithm includes a variety of a installed capacity constraint, a total system carbon emission constraint, a unit operation constraint, a unit operation state calculation equation, a system electric power balance equation, a system annualized cost equation, and a system annual carbon emission calculation equation.

In an embodiment of the disclosure, the operation optimization module further includes a front-end interface, a system report is generated by the front-end interface according to the obtained optimization solution result and the customized capacity configuration and the customized topology relation input via the front-end interface.

In an embodiment of the disclosure, the optimization solution result includes: a variety of a system balance condition, a system operating cost, a loss of load condition, an energy storage condition, an absorption condition of renewable energy source.

According to the apparatus for designing and planning the low-carbon energy system based on source-grid-load-storage-hydrogen-chemical in embodiments of the disclosure, a first professional large model is trained in the field of low-carbon energy by the large language model technology, and a first agent for energy knowledge processing and data analysis is established, and it may realize that the large language model can ask questions according to user's natural language, independently plan the design function, and a friendly interactive experience and a high-quality design and planning report can be provided to the user.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

In addition, terms such as "first" and "second" are used herein for purposes of description and are not intended to indicate or imply relative importance or significance. Thus, the feature defined with "first" and "second" may comprise one or more this feature. In the description of the present disclosure, "a plurality of" means at least two, for example, two or three, unless specified otherwise.

**Claims**

1. A method for designing and planning a low-carbon energy system based on source-grid-load-storage-hydrogen-chemical, compri sing:

    obtaining (S1) user natural language information;
    constructing (S2) a large model for planning the low-carbon energy system; wherein the large model for planning the low-carbon energy system comprises a large language model and a planning module, the planning module comprises a database, a model base, a design optimization module and an operation optimization module;

identifying (S3) a user intention by inputting the user natural language information into the large language model, and invoking the planning module based on the user intention identified;

transforming (S4) content of the user natural language information into an input parameter of the planning module through the large language model, and inputting the input parameter into the design optimization module through a preset interface; wherein the design optimization module is provided with a built-in database and a built-in model base, an optimization problem is constructed in the design optimization module, optimal planning is performed under various boundary conditions by means of minimizing a total cost according to a model of the built-in model base and data of the built-in database, and an optimal design solution and respective performance indicators of the system are generated after calculation of an optimization algorithm;

obtaining (S5) customized capacity configuration by reconfiguring a system capacity according to the optimal design solution of the system and the respective performance indicators of the system, and obtaining a customized topology relation by designing the customized topology relation for respective energy utilization modules of the model of the model base; and

constructing (S5) the optimization problem based on the model base and the database according to the customized capacity configuration and the customized topology relation, and outputting an optimization solution result by converting an lowest daily operating cost to a preset format of optimization objective, converting an operation strategy of each system component into a preset format of optimization variable, and performing an optimization solution on a plurality of time scales.

2. The method according to claim 1, wherein the user natural language information at least comprises a geographical location of the energy system, a latitude and longitude, a type of a power unit, a usage state of an energy storage module, an electricity demand condition, carbon emission related constraints.

3. The method according to claim 1 or 2, wherein the database comprises a variety of device data, meteorological data, internet access policy, load data and other data; wherein the model base comprises a variety of a source side model, a network side model, a load side model, a storage side model, hydrogen side data and chemical data.

4. The method according to any one of claims 1 to 3, wherein the optimization variable of the optimization algorithm comprises a system design variable, comprising installed capacities of various energy technologies, and a system operation variable, comprising an operation strategy of each unit.

5. The method according to any one of claims 1 to 4, wherein an objective function of the optimization algorithm is a minimized system annualized cost; wherein a constraint equation of the optimization algorithm comprises a variety of a installed capacity constraint, a total system carbon emission constraint, a unit operation constraint, a unit operation state calculation equation, a system electric power balance equation, a system annualized cost equation, and a system annual carbon emission calculation equation.

6. The method according to any one of claims 1 to 5, wherein the operation optimization module further comprises a front-end interface, the method comprises:

generating a system report by the front-end interface according to the obtained optimization solution result and the customized capacity configuration and the customized topology relation input via the front-end interface.

7. The method according to any one of claims 1 to 6, wherein the optimization solution result comprises:

a variety of a system balance condition, a system operating cost, a loss of load condition, an energy storage condition, an absorption condition of renewable energy source.

8. An apparatus (10) for designing and planning a low-carbon energy system based on source-grid-load-storage-hydrogen-chemical, comprising:

a user data acquiring module (100), configured to obtain user natural language information;

a system model constructing module (200), configured to construct a large model for planning the low-carbon energy system; wherein the large model for planning the low-carbon energy system comprises a large language model and a planning module, the planning module comprises a database, a model base, a design optimization module and an operation optimization module;

a model invoking module (300), configured to identify a user intention by inputting the user natural language information into the large language model, and invoke the planning module based on the user intention identified;

a design optimization computing module (400), configured to transform content of the user natural language information into an input parameter of the planning module through the large language model, and input the input parameter into the design optimization module through a preset interface; wherein the design optimization module is provided with a built-in database and a built-in model base, an optimization problem is constructed in the design optimization module, optimal planning is performed under various boundary conditions by means of minimizing a total cost according to a model of the built-in model base and data of the built-in database, and an optimal design solution and respective performance indicators of the system are generated after calculation of an optimization algorithm; and

an optimization solution outputting module (500), configured to obtain customized capacity configuration by reconfiguring a system capacity according to the optimal design solution of the system and the respective performance indicators of the system, and obtain a customized topology relation by designing the customized topology relation for respective energy utilization modules of the model of the model base; and construct the optimization problem based on the model base and the database according to the customized capacity configuration and the customized topology relation, convert an lowest daily operating cost to a preset format of optimization objective and convert an operation strategy of each system component into a preset format of optimization variable and output an optimization solution result by performing an optimization solution on a plurality of time scales.

9. The apparatus according to claim 8, wherein the user natural language information at least comprises a geographical location of the energy system, a latitude and longitude, a type of a power unit, a usage state of an energy storage module, an electricity demand condition, carbon emission related constraints.

10. The apparatus according to claim 8 or 9, wherein the database comprises a variety of device data, meteorological data, internet access policy, load data and other data; wherein the model base comprises a variety of a source side model, a network side model, a load side model, a storage side model, hydrogen side data and chemical data.

11. The apparatus according to any one of claims 8 to 10, wherein the optimization variable of the optimization algorithm comprises a system design variable, comprising installed capacities of various energy technologies, and a system operation variable, comprising an operation strategy of each unit.

12. The apparatus according to any one of claims 8 to 11, wherein an objective function of the optimization algorithm is a minimized system annualized cost; wherein a constraint equation of the optimization algorithm comprises a variety of a installed capacity constraint, a total system carbon emission constraint, a unit operation constraint, a unit operation state calculation equation, a system electric power balance equation, a system annualized cost equation, and a system annual carbon emission calculation equation.

13. The apparatus according to any one of claims 8 to 12, wherein the operation optimization module further comprises a front-end interface,
a system report is generated by the front-end interface according to the obtained optimization solution result and the customized capacity configuration and the customized topology relation input via the front-end interface.

14. The apparatus according to any one of claims 8 to 13, wherein the optimization solution result comprises:
a variety of a system balance condition, a system operating cost, a loss of load condition, an energy storage condition, an absorption condition of renewable energy source.

obtaining user natural language information — S1

constructing a large model for planning the low-carbon energy system; wherein the large model for planning the low-carbon energy system comprises a large language model and a planning module; wherein the planning module comprises a database, a model base, a design optimization module and an operation optimization module — S2

identifying a user intention by inputting the user natural language information into the large language model, and invoking the planning module based on the user intention identified — S3

transforming content of the user natural language information into an input parameter of the planning module through the large language model, and inputting the input parameter into the design optimization module through a preset interface; wherein the design optimization module is provided with a built-in database and a built-in model base, an optimization problem is constructed in the design optimization module, optimal planning is performed under various boundary conditions by means of minimizing a total cost according to a model of the built-in model base and data of the built-in database, and an optimal design solution and respective performance indicators of the system are generated after calculation of an optimization algorithm — S4

obtaining customized capacity configuration by reconfiguring a system capacity according to the optimal design solution of the system and the respective performance indicators of the system, and obtaining a customized topology relation by designing the customized topology relation for respective energy utilization modules of the model of the model base; constructing the optimization problem based on the model base and the database according to the customized capacity configuration and the customized topology relation, and outputting an optimization solution result by converting an lowest daily operating cost to a preset format of optimization objective, converting an operation strategy of each system component into a preset format of optimization variable, and performing an optimization solution on a plurality of time scales — S5

FIG. 1

```
{
    "action": "optimization_tool",
    "action_input": {
        "lnglat": [40.0, 116.0],
        "capacity": 20,
        "wind": true,
        "wind_capacity": 0,
        "solar": false,
        "battery": true,
        "charging": false
    }
}
```

FIG. 2

FIG. 3

large model

planning
module           built in
                          designing optimization          completing an input of
                                 module                       a design module
                                                            through an interface

database

model base                capacity configuration        customizing, by a user,
                                 solution                 connections based on an
                                                            obtained planning
                          operation optimization                 solution
built in                         module

                          final scheduling solution

FIG. 4

design optimization module

**optimization variable**

- system design variable-installed capacity of various energy technologies
- system operation variable-operation strategy of each unit

**objective function**

minimized annualized system cost

**model base model**

- unit model
- load model
- network model
- other model

**database data**

- wind and solar data
- load data
- unit technical parameter

**constraint equation**

- installed capacity constraint
- total system carbon emission constraint
- unit operation constraint
- unit operating state calculation equation
- system electric power balance equation
- annualized system cost calculation equation
- system annual carbon emission calculation equation

large model input parameters

- wind and solar data
- system fixed capacity
- longitude and latitude
- system composition

output result

- system design solution
- system performance index

FIG. 5

**front-end interface**
- customized capacity configuration
- customized topology relation
- system operation report
- systematic financial report

**model base model**
- energy unit model
- energy network model
- energy load model

**database data**
- weather condition
- user load
- energy price
- other parameters

**operation optimization module**
optimization goal: lowest daily operating cost
optimization variable: operation strategy of each system component

interrelation of time scales
- day-ahead optimization → direct → intraday roll optimization → direct → day-ahead optimization
- feedback

model basis

computing boundary

optimization solution

**output result**
- system balance condition
- system operating cost
- loss of load condition
- energy storage condition
- absorption condition of renewable energy source

FIG. 6

apparatus for designing and planning a low-carbon energy system based on source-grid-load-storage-hydrogen-chemical

user data acquiring module — 100

system model constructing module — 200

model invoking module — 300

design optimization computing module — 400

optimization solution outputting module — 500

10

FIG. 7

Application Number

EP 24 21 2788

Europäisches
Patentamt
European
Patent Office
Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MENGSHUO JIA ET AL: "Enabling Large Language Models to Perform Power System Simulations with Previously Unseen Tools: A Case of Daline", ARXIV.ORG, CORNELL UNIVERSITY LIBRARY, 201 OLIN LIBRARY CORNELL UNIVERSITY ITHACA, NY 14853, 25 June 2024 (2024-06-25), XP091799717, * abstract * * chapter II * | 1-14 | INV. G06Q10/04 G06Q50/06 |
| X | CN 118 154 353 A (UNIV ZHEJIANG) 7 June 2024 (2024-06-07) * the whole document * | 1-14 | |
| A | ARNAUTOV KONSTANTIN V ET AL: "Application of Large Language Models for Optimization of Electric Power System States", 2024 CONFERENCE OF YOUNG RESEARCHERS IN ELECTRICAL AND ELECTRONIC ENGINEERING (ELCON), IEEE, 29 January 2024 (2024-01-29), pages 314-317, XP034571441, DOI: 10.1109/ELCON61730.2024.10468377 [retrieved on 2024-03-20] * abstract * * chapters II and III * | 1-14 | **TECHNICAL FIELDS SEARCHED (IPC)** G06Q |

The present search report has been drawn up for all claims

| Place of search | Date of completion of the search | Examiner |
|---|---|---|
| Munich | 20 March 2025 | Chauvet, Christophe |

EPO FORM 1503 03.82 (P04C01)

EP 4 718 347 A1

## ANNEX TO THE EUROPEAN SEARCH REPORT
## ON EUROPEAN PATENT APPLICATION NO.

EP 24 21 2788

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | Publication date | Patent family member(s) | Publication date |
|---|---|---|---|
| CN 118154353 A | 07-06-2024 | NONE | |

EPO FORM P0459

For more details about this annex : see Official Journal of the European Patent Office, No. 12/82

20